# EUROPEAN PATENT APPLICATION

(11) **EP 4 410 582 A2**
(43) Date of publication of application: **07.08.2024**
(21) Application number: 23220424.8
(22) Date of filing: 28.12.2023
(51) Int. Cl.: B60K 35/00, B60K 35/10, G06F 3/04886

(54) **AUTOMOTIVE DISPLAY**

(30) Priority: 31.01.2023 JP 2023013052; 16.06.2023 JP 2023099345
(71) Applicant: Suzuki Motor Corporation, Hamamatsu-shi, Shizuoka 432-8611 (JP)
(72) Inventor: UCHIUMI, Sumihiko, HAMAMATSU-SHI, 432-8611 (JP); SUZUKI, Takahiro, HAMAMATSU-SHI, 432-8611 (JP); SUNDA, Takashi, HAMAMATSU-SHI, 432-8611 (JP); KOMATA, Akane, HAMAMATSU-SHI, 432-8611 (JP); OTA, Honoka, HAMAMATSU-SHI,, 432-8611 (JP)
(74) Representative: Plasseraud IP

(57) **Abstract**

[Problem to be Solved] To provide an automotive display with enhanced user convenience.

[Solution] A screen G11a of an automotive display has: a meter area M which is arranged in an upper part and in which meters of an automobile are displayed; a tab area R2a which is arranged below the meter area to be adjacent to the meter area and in which tabs of vehicle function pages with reduced sizes are displayed; and an enlarged display area R3a which is arranged in a region below the meter area except for the tab area and in which the vehicle function pages are displayed in an enlarged manner, the vehicle function pages being displayed in a switchable manner between the tab area and the enlarged display area.

## Description

### [Technical Field]

The present invention relates to an automotive display.

### [Background Art]

Patent Literature 1 describes an information processing apparatus that changes a design of a content display region on the basis of a date and time when a user has registered an electronic payment application, user information, and user location information.

### [Citation List]

### [Patent Literature]

[Patent Literature 1] JP 2020-170442 A

### [Summary of Invention]

### [Problem to be Solved by the Invention]

In view of the need for an automotive display with enhanced user convenience, an object of the present invention is to provide such an automotive display.

### [Means for Solving the Problem]

An automotive display according to the present invention is an automotive display of a touch panel type or a touchless panel type, the automotive display including, on a screen of the automotive display: a meter area which is arranged in an upper part and in which a meter of an automobile is displayed; a tab area which is arranged below the meter area to be adjacent to the meter area and in which a tab of a vehicle function page with a reduced size is displayed; and an enlarged display area which is arranged in a region below the meter area except for the tab area and in which the vehicle function page is displayed in an enlarged manner, the vehicle function page being displayed in a switchable manner between the tab area and the enlarged display area.

### [Advantageous Effect of Invention]

According to the present invention, it is possible to provide an automotive display with enhanced user convenience.

### [Brief Description of Drawings]

[Figure 1] Figure 1 is a block diagram illustrating a configuration of an in-vehicle system.
[Figure 2] Figure 2 is an explanatory diagram illustrating an example of a screen.
[Figure 3] Figure 3 is an explanatory diagram illustrating an example of a screen.
[Figure 4] Figure 4 is a flowchart illustrating a flow of animation display processing.
[Figure 5] Figure 5 is an explanatory diagram illustrating an example of a screen.
[Figure 6] Figure 6 is an explanatory diagram illustrating an example of a screen.
[Figure 7] Figure 7 is an explanatory diagram illustrating an example of a screen.
[Figure 8] Figure 8 is a flowchart illustrating a flow of processing in accordance with SOC.
[Figure 9] Figure 9 is an explanatory diagram illustrating an example of a computer hardware configuration of an automotive display.
[Figure 10] Figure 10 is an explanatory diagram illustrating an example of a software configuration of the automotive display.
[Figure 11] Figure 11 is an explanatory diagram illustrating an example of a screen (a tab area is on the left side in the lower region).
[Figure 12] Figure 12 is an explanatory diagram illustrating an example of a screen (the tab area is on the left side in the lower region).
[Figure 13] Figure 13 is an explanatory diagram illustrating an example of a screen (the tab area is on the upper side in the lower region).
[Figure 14] Figure 14 is an explanatory diagram illustrating an example of a screen (the tab area is on the right side in the lower region).
[Figure 15] Figure 15 is an explanatory diagram illustrating an example of a screen (the tab area is on both right and left sides in the lower region).
[Figure 16] Figure 16 is an explanatory diagram illustrating an example of a screen (the tab area is at the left upper corner in the lower region).
[Figure 17] Figure 17 is an explanatory diagram illustrating an example of a screen (a sliding operation in a direction perpendicular to a predetermined direction).
[Figure 18] Figure 18 is an explanatory diagram illustrating an example of a screen (the sliding operation in the direction perpendicular to the predetermined direction).
[Figure 19] Figure 19 is an explanatory diagram illustrating an example of a screen (some of the pages are not displayed).
[Figure 20] Figure 20 is an explanatory diagram illustrating an example of a screen (some of the pages are not displayed).
[Figure 21] Figure 21 is an explanatory diagram illustrating an example of a screen (an animation is displayed).
[Figure 22] Figure 22 is an explanatory diagram illustrating an example of a screen (an animation is displayed).
[Figure 23] Figure 23 is an explanatory diagram illustrating an example of a screen (a message is displayed).

### [Mode for Carrying Out the Invention]

Hereinafter, the present invention will be described on the basis of illustrated embodiments. However, the present invention is not limited to the embodiments described below.

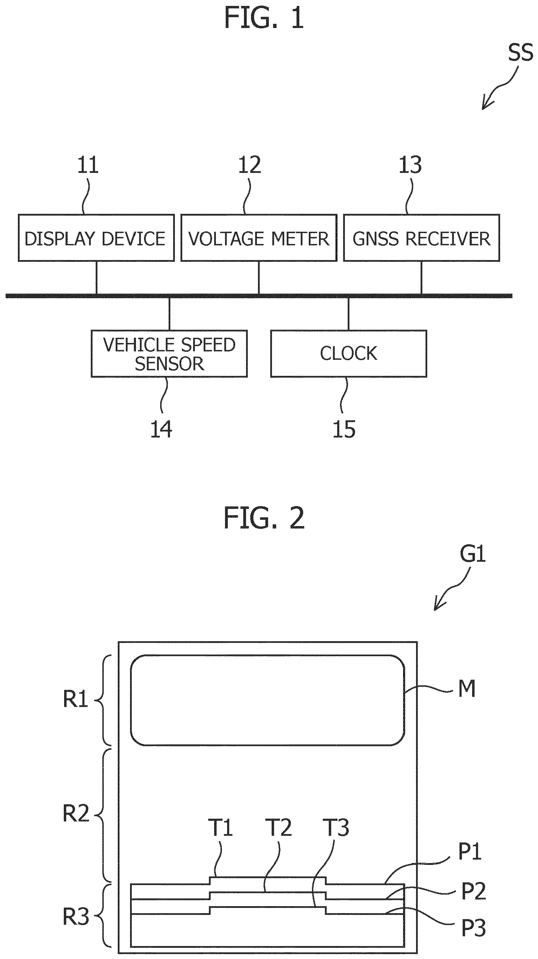

As illustrated in Figure 1, an in-vehicle system SS mounted in an automobile includes a display 11 for an automobile, a voltage meter 12 that measures a voltage of an in-vehicle battery mounted in the automobile, a global navigation satellite system (GNSS) receiver 13, a vehicle speed sensor 14 that detects a speed of the automobile, and a clock 15.

The display 11 is provided in an interior of the automobile and can be provided as a part of an instrument panel, for example. The display 11 can be of a touch panel type.

Figure 2 illustrates a rectangular screen G1 that is displayed on a screen display section of the display 11. The screen is divided into three rectangular regions aligned in the up-down direction and has an upper region R1, an intermediate region R2, and a lower region R3. In the upper region R1, a meter display region M for a speedometer and a tachometer is provided. The intermediate region R2 is blank in the screen G1. In the lower region R3, size-reduced rectangular function pages P1, P2, and P3 are displayed in an overlapping manner, and tabs T1, T2, and T3 (which will be described later) are displayed in an aligned manner in the up-down direction.

The function pages P1, P2, and P3 are pages for an occupant to display and operate vehicle functions. In one example, the function page P1 is a page for a car navigation function, the function page P2 is a page for an audio function, and the function page P3 is a page for an AC function. The tabs T1, T2, and T3 are provided on the upper sides of the function pages P1, P2, and P3, respectively.

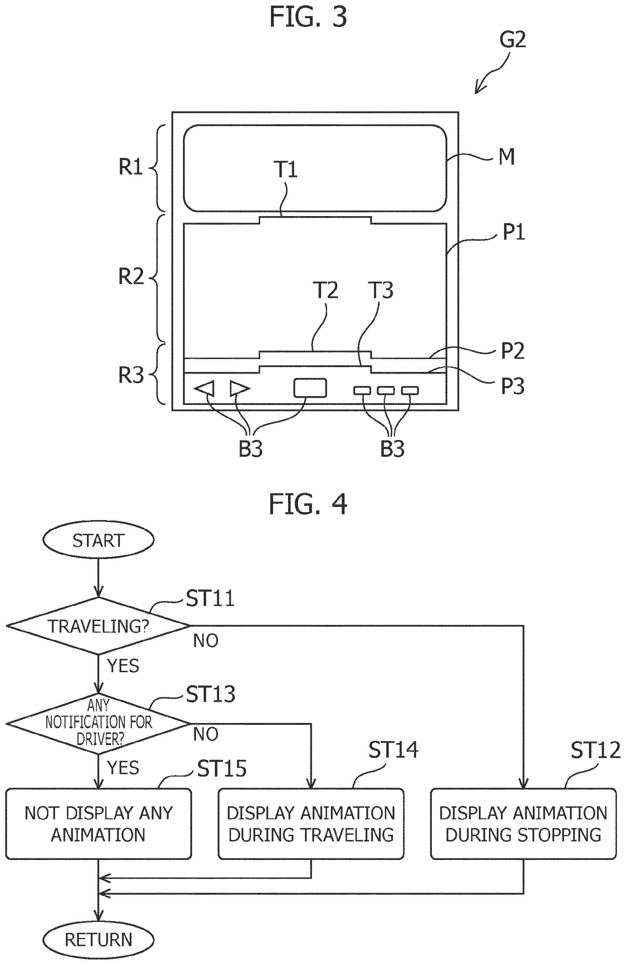

Once a user performs an operation of sliding the screen upward in a state in which the tab T1 on the screen G1 is touched, the screen is switched to a screen G2 illustrated in Figure 3. In the screen G2, the function page P1 provided with the tab T1 is displayed in an enlarged manner in the intermediate region R2.

Once an operation of sliding the screen downward in a state in which the tab T1 on the screen G2 is touched is performed by the user, the screen is switched to the screen G1 illustrated in Figure 2.

Although the tab T1 was described as an example, the same applies to the tabs T2 and T3, and it is possible to perform switching from one of enlarged display and size-reduced display of a corresponding vehicle function page to the other.

Figure 4 illustrates a flow of processing performed by a processor included in the display 11.

In Step ST 11, a control unit determines whether or not the subject vehicle is traveling on the basis of a detection result of at least one of the vehicle speed sensor 14, a preceding vehicle detection section (which will be described later), and a traffic light detection section (which will be described later). Step ST13 is then performed in a case in which it is determined that the subject vehicle is traveling, or Step ST12 is performed otherwise.

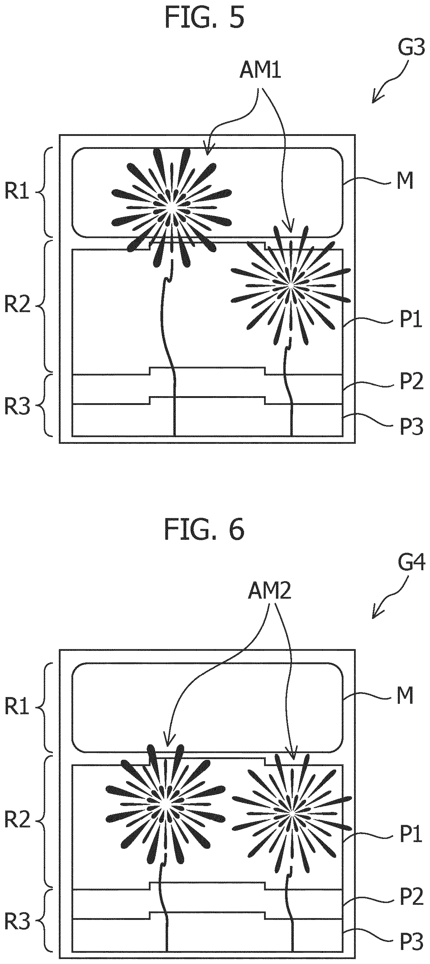

In Step ST12, the control unit controls display of the display 11 to a screen G3 illustrated in Figure 5. Specifically, a firework animation AM1 is displayed over the entire upper region R1, the intermediate region R2, and the lower region R3. A launch speed and burst speed of the firework animation AM1 are relatively high. After this step, return processing is performed.

In Step ST13, the control unit determines whether or not there is a message which a driver of the subject vehicle is to be notified of. An example of the message is a message indicating that an antiskid prevention device mounted in the subject vehicle is being operated. Step ST15 is then performed in a case in which it is determined that there is a message, or Step ST14 is performed otherwise.

In Step ST14, the control unit controls display of the display 11 to a screen G4 illustrated in Figure 6. Specifically, a firework animation AM2 is displayed across the intermediate region R2 and the lower region R3. The firework animation AM2 is not displayed in the upper region R1 in which the meter display region M is provided. The launch speed and the burst speed of the firework animation AM2 are lower than those of the firework animation AM1. After this step, return processing is performed.

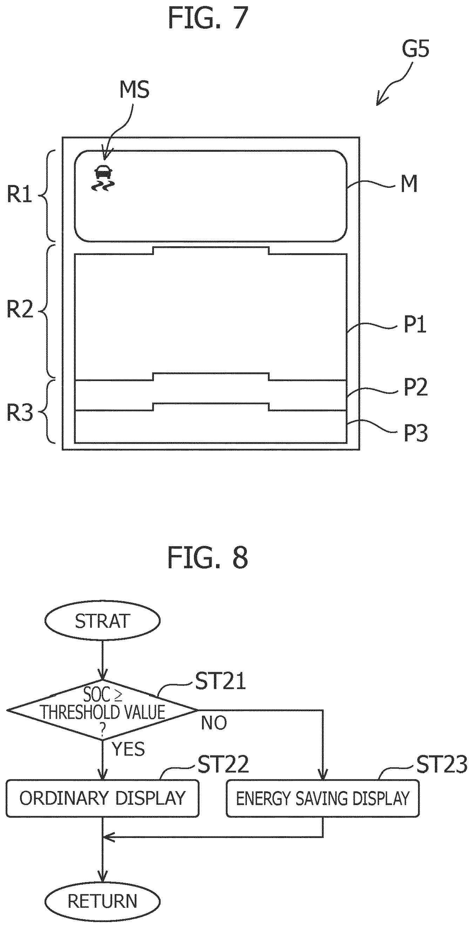

In Step ST15, the control unit controls display of the display 11 to a screen G5 illustrated in Figure 7. Specifically, a message MS is displayed in the meter display region M while no animation is displayed therein. After this step, return processing is performed.

Figure 8 illustrates a flow of different processing (processing in accordance with SOC) performed by the control unit included in the display 11.

In Step S21, the control device determines whether or not SOC (state of charge) of an in-vehicle battery is equal to or greater than a predetermined threshold value.

Step ST22 is then performed in a case in which it is determined that the SOC is equal to or greater than the predetermined threshold value, or Step ST23 is performed otherwise.

In Step ST22, the control device performs ordinary display. After this step, return processing is performed.

In Step ST23, the control device performs energy saving display. Specifically, the animation speed is reduced, and the background color is changed to a color suitable for energy saving. For example, it is possible to change the color from chromatic to achromatic. After this step, return processing is performed.

It is possible to automatically change the display background (color, pattern, animation, and the like) depending on location, time, season, an individual, and the like. Examples are as follows.
a) An animation display region and a motion speed are changed in accordance with a traveling state such as during stopping or during traveling.
b) In regard to a motion speed of an animation, the speed of the motion of the animation during traveling is less than that during stopping. In a case in which there is a notification for the driver, the animation can be in a non-display state.
c) An animation can be displayed over the entire screen including the meter display region during stopping, while an animation can be displayed in the regions other than the meter display region during traveling.
d) Timing for switching display during traveling and during stopping is as follows.

When switching from a stopped state to a traveling state
In a case in which a preceding vehicle is present, the subject vehicle is regarded as traveling even if the vehicle speed of the subject vehicle is zero at the time when the preceding vehicle starts to travel.

In a case in which no preceding vehicle is present, the subject vehicle is regarded as traveling even if the vehicle speed is zero at the time when the signal of the traffic light is changed from a red light to a green light. In a case in which there is no traffic light, the vehicle is regarded as traveling when the speed detected by the vehicle speed sensor is non-zero.

At the time of switching from a state during traveling to a state during stopping

The subject vehicle is regarded as stopping at the time when the vehicle speed detected by the vehicle speed sensor becomes zero. If the subject vehicle is determined to be stopping, the animation display region and the speed are changed gradually.
e) The background (a color, a pattern, an animation, and the like) is changed depending on a state of charge (SOC) of the vehicle.

In a case in which the SOC is relatively low, the animation speed is reduced, and the background color is changed to a color suitable for saving energy.

According to a) above, it is possible to prevent the animation from interrupting the driver who is driving the vehicle.

According to b) above, the animation speed during traveling is relatively low, and it is thus possible to drive the vehicle more safely with a sense of security.

According to c) above, no animation is displayed in a part (meter display region) that the driver often views during driving, and the driver can drive the vehicle while being less distracted.

According to d) above, the switching from the state during stopping to the state during traveling occurs earlier, and it is thus possible to reduce a likelihood that the animation display region and the speed change after the vehicle speed becomes non-zero. It is possible to make the driver less distracted.

Since sudden switching does not occur when the state during traveling is changed to the state during stopping, it is possible to make the driver less inattentive.

According to e) above, it is possible to change the display in accordance with the state of charge and thereby saving energy as needed.

The background can be freely changed when a parking brake is operated before the state during traveling is achieved after an ignition key is turned on. Since higher safety is still achieved even if the background is changed often, it is possible to prevent the driver from being bored by changing the background in a slideshow manner under such a condition.

Energy saving display is performed during idle reduction.

According to the aforementioned embodiment, it is possible to effectively use the intermediate region and the lower region located further downward than the upper region in which the meter display region is present as regions for enlarged display or size-reduced display of the function pages provided with the tabs.

It is possible to easily achieve a change from one of the enlarged display and the size-reduced display of the vehicle function pages to the other by a tab operation. Operability and comfort are improved.

Additionally, it is possible to save a display state (enlarged display or size-reduced display) of the vehicle function pages when the ignition key is turned off. It is possible to bring the display state of the vehicle function pages into the same display state as the saved display state when the ignition key is turned on again.

The animation speed can be set such that the speed is the highest when the vehicle is being stopped and no operation is being performed, is the second highest, when the vehicle is being stopped and an operation is being performed, and is the lowest when the vehicle is traveling.

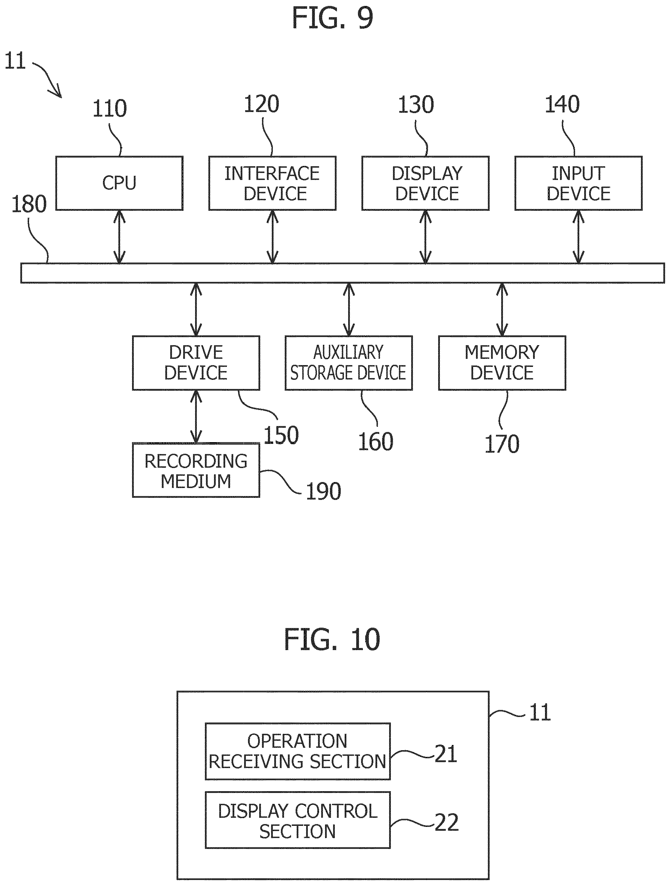

Figure 9 illustrates a computer hardware configuration example of the automotive display 11. The automotive display 11 includes a CPU (processor) 110, an interface device 120, a display device 130, an input device 140, a drive device 150, an auxiliary storage device 160, and a memory device 170, and these are connected to each other via a bus 180.

A program that realizes the functions of the automotive display 11 is provided by a recording medium 190 such as a CD-ROM. Once the recording medium 190 recording the program is set in the drive device 150, the program is installed in the auxiliary storage device 160 from the recording medium 190 via the drive device 150. Alternatively, the installation of the program is not necessarily performed using the recording medium 190 and can also be performed through a network. The auxiliary storage device 160 stores the installed program and stores necessary files, data, and the like.

The memory device 170 reads the program from the auxiliary storage device 160 and stores the program in a case in which an instruction for activating the program is provided. The CPU 110 realizes the functions of the automotive display 11 in accordance with the program stored in the memory device 170. The interface device 120 is used as an interface for establishing connection to another computer through a network. The display device 130 displays a graphical user interface (GUI) or the like based on the program. An example of the GUI is as described above. The input device 140 is a touch panel or the like.

Figure 10 illustrates a configuration example of software functions of the automotive display 11. The automotive display 11 includes an operation receiving section 21 that receives user operations (a sliding operation and the like) and a display control section 22 that controls display on the screen in accordance with the operations received by the operation receiving section 21. The display control section 22 can also control the display on the screen on the basis of data received from at least one of the voltage meter 12, the GNSS receiver 13, the vehicle speed sensor 14, and the clock 15.

The automotive display 11 may further include a preceding vehicle detection section and a traffic light detection section, which will be described later. In this case, the display control section 22 can also control the display on the screen on the basis of detection information of the preceding vehicle detection section and the traffic light detection section.

Unnecessary inputs to the automotive display are reduced by shortening the user operation time and reducing inconvenience, and it is thus possible to reduce arithmetic operation load of the automotive display.

The display 11 is not limited to one of a touch panel type and may be one of a touchless panel type (a model that can be operated merely by locating a finger close to the panel without direct contact therewith).

### Other Embodiments

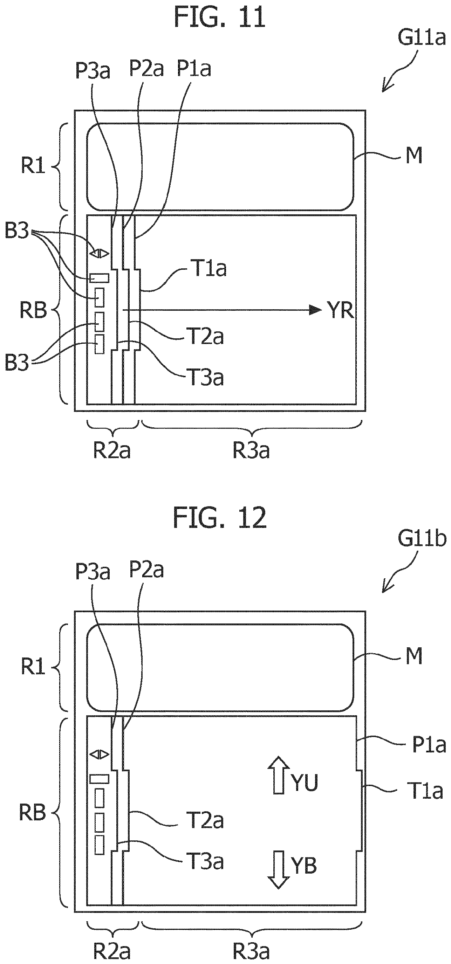

Figure 11 illustrates a screen G11a with a rectangular shape displayed on a screen display section of the display 11. The screen is split into two rectangular regions aligned in the up-down direction and includes an upper region R1 and a lower region RB. Both the upper region R1 and the lower region RB are horizontally long, and the dimension in the left-right direction is substantially equal to the dimension of the screen G11a in the left-right direction. The lower region RB has a larger dimension in the up-down direction as compared with the upper region R1. As described above, a meter display region M for a speedometer, a tachometer, and the like is provided in the upper region R1.

The lower region RB is further split into two rectangular regions aligned in the left-right direction and includes a vertically long region (a tab area in which a tab for a size reduced vehicle function page is displayed) R2a located on the left side and a horizontally long region (an enlarged display area in which an enlarged vehicle function page is displayed) R3a located on the right side. In the region R2a, rectangular function pages P1a, P2a, and P3a are displayed with reduced sizes and in an overlapping manner, and tabs T1a, T2a, and T3a are displayed in an aligned manner in the left-right direction. The vehicle function page P3a is displayed with a reduced size at the frontmost part, the vehicle function page P2a is displayed with a reduced size behind the vehicle function page P3a, and the vehicle function page P1a is displayed further behind the vehicle function page P2a. On the vehicle function page P3a displayed at the frontmost part, a function operation button B3 simplified as compared with a case in which the page is displayed in an enlarged manner can be displayed. When all the vehicle function pages P1a, P2a, and P3a are displayed with reduced sizes in the tab area R2a, the region R3a may be blank or provide a display based on a function such as a car navigation function.

In one example, the function page P1a is a media function page, the function page P2a is an advanced driving assistant system (ADAS) function page, and the function page P3a is an AC function page. The tabs T1a, T2a, and T3a are provided on the right sides of the function pages P1a, P2a, and P3a, respectively.

Once a sliding operation in the screen right direction indicated by the arrow YR is performed by a user in a state in which the tab T1a on the screen G1 1a is touched, the screen is switched to a screen G1 1b illustrated in Figure 12. On the screen G1 1b, the function page P1a provided with the tab T1a is displayed in an enlarged manner in the region R3a.

Once a sliding operation in the screen left direction (the direction exactly opposite to the arrow YR) is performed by the user in a state in which the tab T1a on the screen G11b is touched, the screen is switched to the screen G11a illustrated in Figure 11.

Although the tab T1a has been described as an example, the same applies to the tabs T2a and T3a, and the corresponding vehicle function pages can be switched between one of display in an enlarged manner and display with a reduced size.

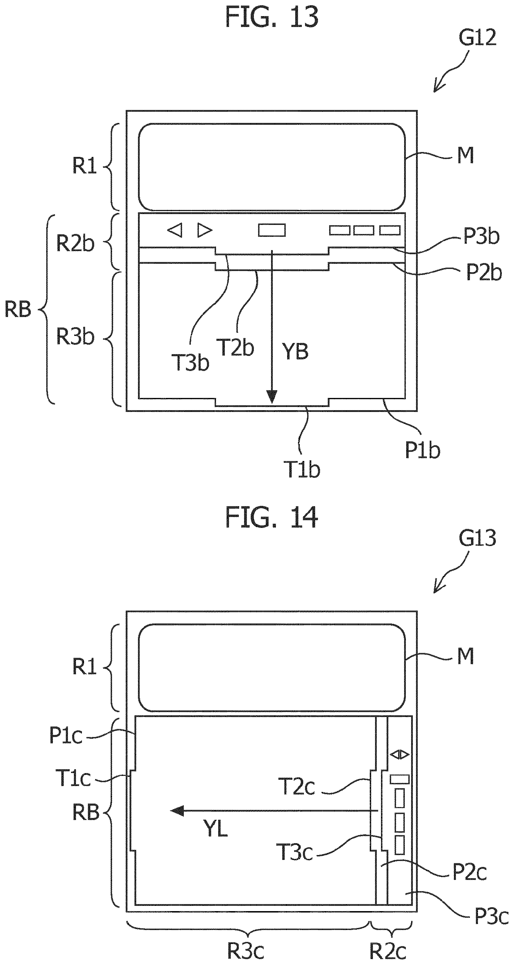

The lower region RB may be split into two rectangular regions aligned in the up-down direction and have a horizontally long region R2b (a tab area in which the tabs of the vehicle function pages with reduced sizes are displayed) located on the upper side and a horizontally long region R3b (an enlarged display area in which an enlarged vehicle function page is displayed) located on the lower side as illustrated on a screen G12 in Figure 13. In the region R2b, rectangular function pages P1b, P2b, and P3b can be displayed with reduced sizes in an overlapping manner, and tabs T1b, T2b, and T3b can be displayed in an aligned manner in the up-down direction. The tabs T1b, T2b, and T3b are provided on the lower sides of the function pages P1b, P2b, and P3b, respectively. The vehicle function pages displayed with reduced size can be displayed in an enlarged manner by performing a sliding operation in the screen lower direction indicated by the arrow YB on the page.

The lower region RB may be split into two rectangular regions aligned in the left-right direction and have a vertically long region R2c (a tab area in which the tabs of the vehicle function pages with reduced sizes are displayed) located on the right side and a horizontally long region R3c (an enlarged display area in which the enlarged vehicle function page is displayed) located on the left side as illustrated on a screen G13 in Figure 14. In the region R2c, rectangular function pages P1c, P2c, and P3c can be displayed with reduced sizes in an overlapping manner, and tabs T1c, T2c, and T3c can be displayed in an aligned manner in the left-right direction. The Tabs T1c, T2c, and T3c are provided on the left sides of the function pages P1c, P2c, and P3c, respectively. It is possible to display the vehicle function pages displayed with reduced size in an enlarged manner by performing a sliding operation in the screen left direction indicated by the arrow YL on the page.

The lower region RB may be split into three rectangular regions aligned in the left-right direction and have a vertically long region R2d (a tab area in which the tabs of the vehicle function pages with reduced size are displayed) located on the leftmost side, a vertically long region R4d (a tab area in which the tabs of the vehicle function pages with reduced sizes are displayed) located on the rightmost side, and a horizontally long region R3d (an enlarged display area in which the enlarged vehicle function page is displayed) located at the center in the left-right direction. In the region R2d, rectangular function pages P1d, P2d, and P3d can be displayed with reduced sizes in an overlapping manner, and tabs T1d, T2d, and T3d can be displayed in an aligned manner in the left-right direction. In the region R4d, rectangular function pages P4d and P5d can be displayed with reduced sizes in an overlapping manner, and tabs T4d and T5d can be displayed in an aligned manner in the left-right direction. The tabs T1d, T2d, and T3d are provided on the right sides of the function pages P1d, P2d, and P3d, respectively. The tabs T4d and T5d are provided on the left sides of the function pages P4d and P5d, respectively.

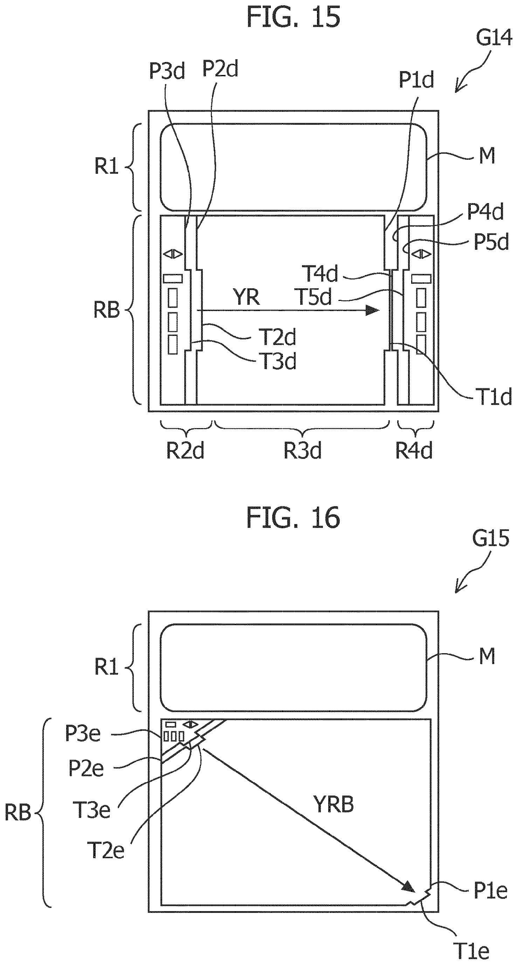

As illustrated on a screen G15 in Figure 16, a region at the left upper corner in the lower region RB may be used as a tab area in which the tabs of the vehicle function pages with reduced sizes are displayed, and the other region in the lower region RB may be used as an enlarged display area in which the enlarged vehicle function page is displayed. In the tab area, rectangular function pages P1e, P2e, and P3e can be displayed as right triangles with reduced sizes in an overlapping manner, and tabs T1e, T2e, and T3e can be displayed in an aligned manner in the diagonal direction of the lower region RB. When the rectangular function pages P1e, P2e, and P3e are displayed as right triangles with reduced sizes, the two sides forming a right angle of each page substantially overlap the upper side and the left side of the lower region RB, respectively. The tabs T1e, T2e, and T3e are provided at the right lower corners of the function pages P1e, P2e, and P3e, respectively. It is possible to display the vehicle function pages displayed with reduced sizes in an enlarged manner by performing a sliding operation in the screen right lower direction indicated by the arrow YRB on the page.

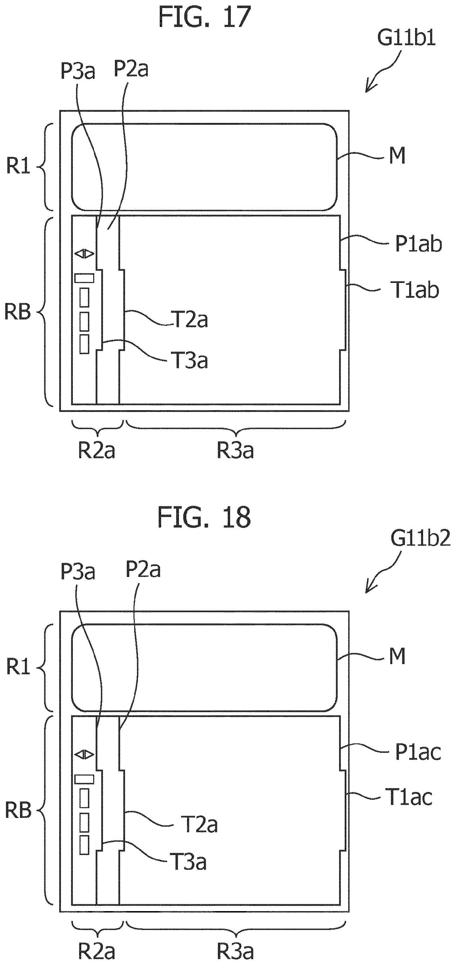

Figure 12 will now be referred to again. A configuration in which once a sliding operation in the screen upper direction indicated by the arrow YU is performed by the user on the function page P1a displayed on the screen G11b, the screen is switched to a screen G11b1 illustrated in Figure 17, may be employed. In other words, the function page P1a including the tab T1a on the screen G11b is switched to a function page Plab including a tab T1ab. In one example, the function page P1a is an audio function page included in media functions, and the function page Plab is a TV function page included in the media functions.

A configuration in which once a sliding operation in the screen lower direction indicated by the arrow YB is performed by the user on the function page P1a displayed on the screen Gllb in Figure 12, the screen is switched to a screen G11b2 illustrated in Figure 18, may be employed. In other words, the function page P1a including the tab T1a on the screen G11b is switched to a function page Plac including a tab T1ac. In one example, the function page P1a is the audio function page included in the media functions, and the function page Plab is the radio function page included in the media functions.

In this manner, once the sliding operation in the direction (the arrow YU or the arrow YB in Figure 12) perpendicular to the sliding direction (the arrow YR in Figure 11) when the function page is displayed in an enlarged manner or with a reduced size is received, the display is switched to another function page for a function similar to the function of the function page.

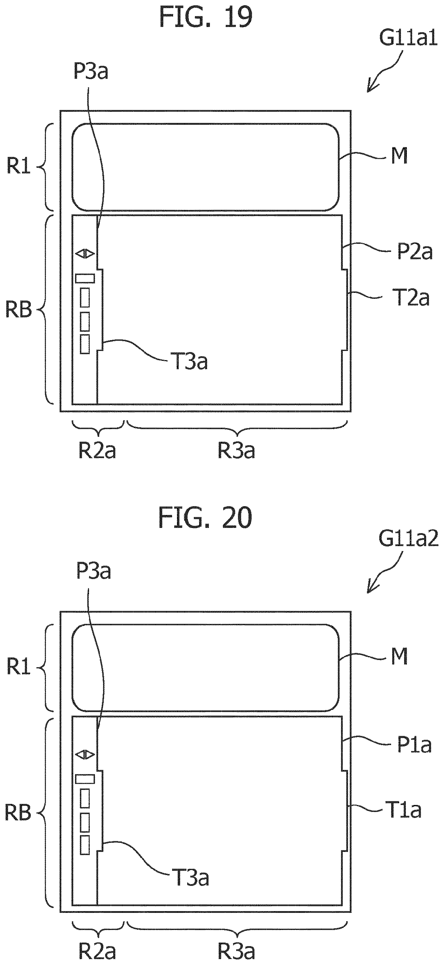

Figure 11 will now be referred to again. A configuration in which once a sliding operation in the screen right direction indicated by the arrow YR is performed by the user on the tab T2a of the function page P2a displayed with a reduced size on the screen G11a, the screen is switched to a screen G11a1 illustrated in Figure 19, may be employed. In other words, the function page P2a on the screen G11a can be displayed in an enlarged manner in the region R3a, and the function page P1a can be kept in a non-displayed state including the tab T1a.

The tab T1a of the function page P1a, the most part of which is hidden by the function page P2a, may be displayed on the right side of the function page P2a when the function page P2a is displayed in an enlarged manner.

On the other hand, if the function page P1a is maintained in a non-displayed state including the tab T1a and the function page P2a is displayed in the entire region R3a except for the region in which the function page P3a is displayed with a reduced size when the function page P2a is displayed in an enlarged manner as illustrated in Figure 19, it is possible to display the function page P2a with a larger size.

A configuration in which once a sliding operation in the screen right direction indicated by the arrow YR is performed by the user on the tab T1a of the function page P1a displayed with a reduced size on the screen G11a in Figure 11, the screen is switched to a screen G11a2 illustrated in Figure 20, may be employed. In other words, the function page P1a on the screen G11a can be displayed in an enlarged manner in the region R3a, and the function page P2a can be kept in a non-displayed state including the tab T2a.

The tab T2a of the function page P2a located in front of the function page P1a may be displayed on the left side of the function page P1a when the function page P1a is displayed in an enlarged manner.

On the other hand, if the function page P2a is not displayed including the tab T2a and the function page P1a is displayed in the entire region R3a except for the region in which the function page P3a is displayed with a reduced size when the function page P1a is displayed in an enlarged manner as illustrated in Figure 20, it is possible to display the function page P1a with a larger size.

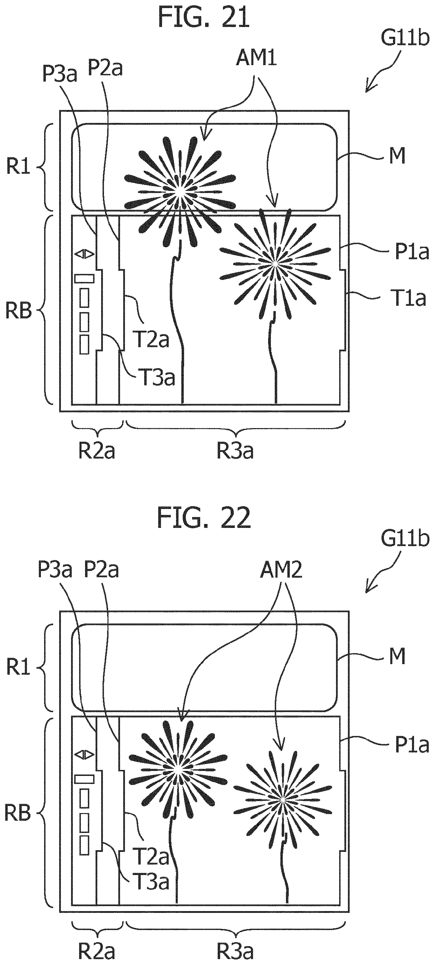

As illustrated in Figure 21, a firework animation AM1 may be displayed over the entire upper region R1 and lower region RB on the screen 11b illustrated in Figure 12.

Alternatively, a firework animation AM2 may be displayed over the lower region RB as illustrated in Figure 22. The firework animation AM2 is not displayed in the upper region R1 in which the meter display region M is provided.

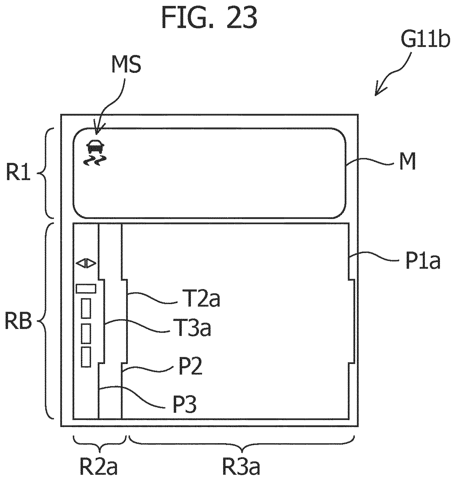

Furthermore, no animation may be displayed with a message MS displayed in the meter display region M as illustrated in Figure 23.

In regard to the modes described hitherto, the following supplements will be disclosed.

### Supplement A1

An automotive display of a touch panel type or a touchless panel type, the automotive display including:
on a screen of the automotive display: a meter area arranged in an upper part and displays automotive meters; a tab area arranged in a lower part and displays tabs of vehicle function pages with reduced sizes; and an enlarged display area arranged between the meter area and the tab area and displays the vehicle function pages in an enlarged manner,
once an operation of sliding one of the tabs displayed in the tab area upward on the screen is received, one of the vehicle function pages corresponding to the tab is displayed in an enlarged manner in the enlarged display area, and
once an operation of sliding the vehicle function page displayed in an enlarged manner in the enlarged display area downward on the screen is received, the vehicle function page is reduced in size, and the tab of the vehicle function page is displayed in the tab area.

### Advantages of Supplement A1

It is possible to effectively use the regions located further downward than the meter area provided in the upper part by the tabs and the vehicle function page displayed in an enlarged manner.

It is possible to operate the functions with the vehicle function page reduced in size by a tab operation or with the vehicle function page displayed in an enlarged manner by an easy sliding operation as needed. Operability and comfort are thus improved.

### Supplement A2

The automotive display according to Supplement A1, in which
when an ignition key is turned off and the automotive display is not displayed, a display state of the vehicle function pages immediately before a non-display state is achieved is saved, and
when the ignition key is turned on and the automotive display is displayed again, the vehicle function pages are displayed in the same display state as the saved display state.

### Advantages of Supplement A2

If a vehicle function page is displayed in an enlarged manner immediately before the ignition key is turned off, the vehicle function page is displayed in an enlarged manner when the ignition key is turned on again. If the vehicle function page is displayed in a size-reduced manner immediately before the ignition key is turned off, the vehicle function page is displayed in a size-reduced manner when the ignition key is turned on again. Since the display state before the ignition key was previously turned off is held in this manner, satisfactory usability of the user is achieved.

In a case in which the display state before the ignition key was previously turned off is not held, the user who desires to frequently operate an AC function, for example, must perform an operation of enlarging the AC function screen every time the ignition key is turned on, which is inconvenient.

The user feels comfortable since the vehicle function page displayed in an enlarged manner when the ignition key was turned off is displayed in an enlarged manner from the beginning when the ignition key is turned on again by the display state before the ignition key was previously turned off being held. The user does not have to perform unnecessary operations, and operation efficiency is thus improved. Since unnecessary operations are reduced, the amount of processing performed by software of the automotive display is also reduced.

### Supplement A3

The automotive display according to Supplement A1, in which
once an operation of sliding one of the tabs displayed in the tab area upward on the screen is received,
an upper end of one of the vehicle function pages corresponding to the tab automatically moves to an upper end of the enlarged display area without stopping in the middle and the vehicle function page is displayed in an enlarged manner in the enlarged display area, and
once an operation of sliding the tabs of the vehicle function page displayed in an enlarged manner in the enlarged display area downward on the screen is received, the upper end of the vehicle function page automatically moves to the tab area without stopping in the middle.

### Advantages of Supplement A3

It is possible to instantly achieve a change from one of the enlarged display and the size-reduced display of the vehicle function pages by a tab operation in the up-down direction.

It is possible to maintain user driving and comfort while the display of the meters is maintained regardless of the display state of the vehicle function pages. It is also possible to display the vehicle function pages in an enlarged manner.

There are only two display states of the vehicle function pages, namely, size-reduced display and enlarged display, and the vehicle function pages do not stop in a halfway display state that is neither the enlarged display nor the size-reduced display (for example, a state in which the vehicle function pages are displayed with a size of about half the size of the enlarged display). Therefore, the vehicle function pages are immediately displayed in an enlarged manner by sliding the tabs of the vehicle function pages when the user desires to perform enlarged display. As a result, it is possible to immediately perform an operation of a function that the user desires to use.

The same applies to a case in which switching from the enlarged display to the size-reduced display is performed, and the display does not stop in a halfway display state that is neither the enlarged display nor the size-reduced display. Therefore, it is possible to quickly switch the target vehicle function page to size-reduced display.

### Supplement A4

The automotive display according to Supplement A1, in which an animation is displayed under a specific condition when all the vehicle function pages are displayed in a size-reduced manner.

### Advantages of Supplement A4

Since animation is displayed between the meter area and the tab area on the display instead of nothing being displayed there when all the vehicle function pages are displayed in a size-reduced manner, it is possible to improve comfort of the user who views the animation.

The user can enjoy the display of the animation by displaying all the vehicle function pages in a size-reduced manner, and comfort is improved.

No animation is displayed once any of the tabs of the vehicle function pages is slid and the corresponding vehicle function page is displayed in an enlarged manner. Therefore, it is possible to enhance operation efficiency without interrupting operations on the vehicle function page.

In a case in which the ignition key is switched from ON to OFF in a state in which the animation is being displayed, the animation is displayed again when the ignition key is turned on next time. Therefore, it is not necessary for the user who displays and enjoy the animation to perform unnecessary operations to display the animation every time the ignition key is turned on.

A specific condition may be at least one of a location of the vehicle, a clock time, a season, a user, and the like.

### Supplement A5

The automotive display according to Supplement A4, in which a speed of the animation is higher during stopping than during traveling of an automobile with the automotive display mounted therein.

### Advantages of Supplement A5

It is possible to reduce the likelihood that the user will be distracted during driving by setting a relatively low speed for the animation during traveling.

The user can enjoy a difference in animation during stopping and during traveling, and comfort is improved.

### Supplement A6

The automotive display according to Supplement A5, in which
a plurality of the vehicle function pages are displayed in a superimposed manner in the tab area, and
a simplified function operation button is displayed in a vehicle function page located on the frontmost side, and
when the function operation button is being operated, the animation is displayed at a lower speed than a speed when no operation is being performed on the function operation button, or the animation is not displayed.

### Advantages of Supplement A6

For the vehicle function page located on the frontmost side (the vehicle function page P3 for the AC function in Figure 3, for example) from among the plurality of vehicle function pages displayed in a size-reduced manner in the tab area, it is possible to perform simple function operations by using a simplified function operation button (a button B3 on the vehicle function page P3 in Figure 3). It is possible to reduce a likelihood that the animation interrupts user operation by setting a relatively low animation speed or by not displaying any animation during the simple function operation.

### Supplement B 1

An automotive display of a touch panel type or a touchless panel type, the automotive display including:
on a screen of the automotive display: a meter area which is arranged in an upper part and in which a meter of an automobile is displayed;
a tab area which is arranged below the meter area to be adjacent to the meter area and in which a tab of a vehicle function page with a reduced size is displayed; and
an enlarged display area which is arranged in a region below the meter area except for the tab area and in which the vehicle function page is displayed in an enlarged manner,
the vehicle function page being displayed in a switchable manner between the tab area and the enlarged display area.

### Advantages of Supplement B 1

It is possible to effectively use the region below the meter area as the tab area and the enlarged display area.

It is possible to display the vehicle function page with a reduced size or in an enlarged manner as needed. Operability and comfort during utilization of vehicle functions are improved.

### Supplement B2

The automotive display according to Supplement B1, in which
once an operation of sliding the tab displayed in the tab area in a predetermined direction is received, the vehicle function page corresponding to the tab is displayed in an enlarged manner in the enlarged display area, and
once an operation of sliding the vehicle function page displayed in an enlarged manner in the enlarged display area in a direction opposite to the predetermined direction is received, the vehicle function page is reduced in size, and the tab of the vehicle function page is displayed in the tab area.

### Advantages of Supplement B2

The predetermined direction is a screen right direction in a case in which the tab area is displayed on the left side in the lower region RB, is a screen lower direction in a case in which the tab area is displayed on the upper side in the lower region RB, is a screen left direction in a case in which the tab area is displayed on the right side in the lower region RB, and is a screen right obliquely lower direction in a case in which the tab area is displayed at the left upper corner in the lower region RB.

It is possible to effectively use the region below the meter area by the sliding operation in such a predetermined direction or in the direction opposite to the predetermined direction.

The vehicle function page is displayed with a reduced size, and it is possible to easily display the vehicle function page in an enlarged manner by performing the sliding operation in the predetermined direction as needed. Operability and comfort during utilization of vehicle functions are improved.

### Supplement B3

The automotive display according to Supplement B2, in which
once the operation of sliding the tab displayed in the tab area in the predetermined direction is received, an end of the vehicle function page corresponding to the tab automatically moves to an end of the enlarged display area without stopping in the middle, and the vehicle function page is displayed in an enlarged manner in the enlarged display area, and
once the operation of sliding the tab of the vehicle function page displayed in an enlarged manner in the enlarged display area in the opposite direction is received, the end of the vehicle function page automatically moves to the tab area without stopping in the middle.

### Advantages of Supplement B3

It is possible to instantaneously change the display of the vehicle function page by a tab operation.

The display of the meter is maintained regardless of the display state of the vehicle function page, and it is also possible to maintain comfort of a user.

There are only two display states of the vehicle function page, namely, display with a reduced size and display in an enlarged manner, and the vehicle function page does not stop in a halfway display state in which the display is neither in an enlarged manner nor with a reduced size (for example, a state in which the vehicle function page is displayed with a size of about a half the size of the display in an enlarged manner) when the vehicle function page is to be displayed in an enlarged manner. Therefore, the vehicle function page is immediately displayed in an enlarged manner if the tab of the vehicle function page is slid when the user desires to display the vehicle function page in an enlarged manner. As a result, it is possible to immediately operate a function that the user desires to use.

Similarly, the vehicle function page does not stop in a halfway display state in which the display is neither in an enlarged manner nor with a reduced size when the vehicle function page is switched from the display in an enlarged manner to the display with a reduced size as well. It is thus possible to quickly switch the target vehicle function page to the display with a reduced size.

### Supplement B4

The automotive display according to Supplement B1, in which when all of the vehicle function pages are displayed with a reduced size, another vehicle function is displayed in the enlarged display area.

### Advantages of Supplement B4

It is possible to display another vehicle function (a vehicle function that is not included in the vehicle function page, such as car navigation) in the enlarged display area when all the vehicle function page is displayed with a reduced size. It is possible to improve operability and comfort and to effectively use a space when all the vehicle function page is displayed with a reduced size.

### Supplement B5

The automotive display according to Supplement B2, in which once an operation of sliding the vehicle function page displayed in an enlarged manner in a direction perpendicular to the predetermined direction is received, display of the vehicle function page is changed to display of another vehicle function.

### Advantages of Supplement B5

Since it is possible to display more functions in vehicle function pages in a limited number, a layout characteristic is improved, and operability is also improved.

For example, if the sliding operation in the direction perpendicular to the predetermined direction is received on a page of an audio function which is one of media functions, it is possible to change the display to display for another function (such as a TV function or a radio function) among the media functions.

Display may be changed when the sliding operation in the direction perpendicular to the predetermined direction is received on one page rather than all the pages, and the display may not be changed even if the sliding operation in the direction perpendicular to the predetermined direction is received on the other pages. For example, in order for a defroster switch to be constantly displayed on an AC function page, it is possible to keep the display unchanged even if the sliding operation in the direction perpendicular to the predetermined direction is received in the AC function page displayed in an enlarged manner.

Note that even when the AC function page is displayed with a reduced size, it is possible to display the page at the frontmost part in the tab area (for example, the vehicle function page P3a in Figure 11).

### Supplement B6

The automotive display according to Supplement B1, in which
a plurality of the vehicle function pages are displayed in a superimposed manner in the tab area,
a function operation button simplified as compared with a function operation button displayed in an enlarged manner in the enlarged display area is displayed in the frontmost vehicle function page in the tab area,
when the vehicle function page is displayed in an enlarged manner in the enlarged area, the vehicle function pages other than the frontmost vehicle function page and the vehicle function page displayed in an enlarged manner in the enlarged display area are not displayed, and
the vehicle function page is displayed in an enlarged manner in an entire region below the meter area except for the frontmost vehicle function page.

### Advantages of Supplement B6

Since the vehicle function pages except for the frontmost vehicle function page in the tab area and the vehicle function page displayed in an enlarged manner including tabs are not displayed, and the vehicle function page displayed in an enlarged manner can be displayed with a larger size, visibility is improved.

On the other hand, the frontmost vehicle function page in the tab area is continuously displayed with a reduced size, it is possible to perform an operation with the relatively simplified function operation button on the frontmost vehicle function page in the tab area even when the vehicle function page displayed in an enlarged manner is being operated.

### Supplement B7

The automotive display according to Supplement B1, in which when all the vehicle function page is displayed with a reduced size, an animation is displayed under a specific condition.

### Advantages of Supplement B7

An animation is displayed between the meter area and the tab area on the display rather than nothing displayed when all the vehicle function page is displayed with a reduced size, and it is possible to improve comfort of the user who views the animation.

The user can enjoy the display of the animation by displaying all the vehicle function page with a reduced size, and comfort is improved.

It is possible to prevent the animation from being displayed when a tab of any of the vehicle function pages is slid and the vehicle function page is displayed in an enlarged manner. Therefore, an operation on the vehicle function page is not interrupted, and operation efficiency can be enhanced.

In a case in which an ignition key is shifted from ON to OFF in a state in which the animation is displayed, the animation is displayed again next time the ignition key is turned on. Therefore, it is not necessary for the user who displays and enjoys the animation to perform an unnecessary operation for displaying the animation every time the ignition key is turned on.

The specific condition can be at least any of the location of the automobile, the clock time, the season, the user, and the like.

### Supplement B8

The automotive display according to Supplement B7, in which a speed of the animation is higher and a display area of the animation is larger during stopping than during traveling of the automobile in which the automotive display is mounted.

### Advantages of Supplement B8

It is possible to reduce the likelihood that the user who is driving is distracted by setting the speed of the animation during traveling to be relatively low or by not displaying the animation in the meter area unlike during stopping.

The user can enjoy a difference in the animation during stopping and during traveling, and comfort is improved.

Although the embodiments of the present invention have been described above, the present invention is not limited to the embodiments that have already been described, and various modifications and changes can be made on the basis of the technical idea of the present invention.

### [Reference Signs List]

- SS: In-vehicle system
- 11: Display
- 12: Voltage meter
- 13: GNSS receiver
- 14: Vehicle speed sensor
- 15: Clock
- 21: Operation receiving section
- 22: Display control section

- G1 to G5: Screen
- T1 to T3: Tab
- P1 to P3: Vehicle function page
- R1 to R3: Region
- M: Meter display region
- AM1, AM2: Animation
- MS: Message

- G11a, G11b, G12 to G15: Screen
- P1a, P2a, P3a: Vehicle function page
- T1a, T2a, T3a: Tab
- RB: Lower region

## Claims

1. An automotive display of a touch panel type or a touchless panel type, the automotive display comprising, on a screen of the automotive display:
a meter area which is arranged in an upper part and in which a meter of an automobile is displayed;
a tab area which is arranged below the meter area to be adjacent to the meter area and in which a tab of a vehicle function page with a reduced size is displayed; and
an enlarged display area which is arranged in a region below the meter area except for the tab area and in which the vehicle function page is displayed in an enlarged manner,
the vehicle function page being displayed in a switchable manner between the tab area and the enlarged display area.

2. The automotive display as claimed in claim 1, wherein
once an operation of sliding the tab displayed in the tab area in a predetermined direction is received, the vehicle function page corresponding to the tab is displayed in an enlarged manner in the enlarged display area, and
once an operation of sliding the vehicle function page displayed in an enlarged manner in the enlarged display area in a direction opposite to the predetermined direction is received, the vehicle function page is reduced in size, and the tab of the vehicle function page is displayed in the tab area.

3. The automotive display as claimed in claim 2, wherein
once the operation of sliding the tab displayed in the tab area in the predetermined direction is received, an end of the vehicle function page corresponding to the tab automatically moves to an end of the enlarged display area without stopping in the middle, and the vehicle function page is displayed in an enlarged manner in the enlarged display area, and
once the operation of sliding the tab of the vehicle function page displayed in an enlarged manner in the enlarged display area in the opposite direction is received, the end of the vehicle function page automatically moves to the tab area without stopping in the middle.

4. The automotive display as claimed in claim 1, wherein when all the vehicle function page is displayed with a reduced size, another vehicle function is displayed in the enlarged display area.

5. The automotive display as claimed in claim 2, wherein once an operation of sliding the vehicle function page displayed in an enlarged manner in a direction perpendicular to the predetermined direction is received, display of the vehicle function page is changed to display of another vehicle function.

6. The automotive display as claimed in claim 1, wherein
a plurality of the vehicle function pages are displayed in a superimposed manner in the tab area,
a function operation button simplified as compared with a function operation button displayed in an enlarged manner in the enlarged display area is displayed in a frontmost vehicle function page in the tab area,
when the vehicle function page is displayed in an enlarged manner in the enlarged area, the vehicle function pages other than the frontmost vehicle function page and the vehicle function page displayed in an enlarged manner in the enlarged display area are not displayed, and
the vehicle function page is displayed in an enlarged manner in an entire region below the meter area except for the frontmost vehicle function page.

7. The automotive display as claimed in claim 1, wherein when all the vehicle function page is displayed with a reduced size, an animation is displayed under a specific condition.

8. The automotive display as claimed in claim 7, wherein a speed of the animation is higher and a display area of the animation is larger during stopping than during traveling of the automobile in which the automotive display is mounted.
